# EUROPÄISCHE PATENTANMELDUNG

(11) **EP 4 494 919 A1**
(43) Veröffentlichungstag der Anmeldung: **22.01.2025**
(21) Anmeldenummer: 24187501.2
(22) Anmeldetag: 09.07.2024
(51) Int. Cl.: B60L 53/18, B60L 53/30, B60L 53/31, H02G 11/00

(54) **GEHÄUSE FÜR EINE LADESTATION UND LADESTATION MIT EINEM SOLCHEN GEHÄUSE**

(30) Priorität: 11.07.2023 DE 102023118367
(71) Anmelder: ads-tec Energy GmbH, 72622 Nürtingen (DE)
(72) Erfinder: SPEIDEL, Thomas, 71706 Markgröningen (DE); MOLCHANOV, Roman, 72654 Neckartenzlingen (DE); GREIF, Andreas, 73235 Weilheim (DE)
(74) Vertreter: Kordel, Mattias

(57) **Zusammenfassung**

Die Erfindung betrifft ein Gehäuse (3) für eine Ladestation (1) mit einem mindestens eine Ladekabel-Öffnung (6.1, 6.2) begrenzenden Öffnungs-Verkleidungselement (7), wobei
- das Gehäuse (3) mindestens einen Ladekabel-Arm (9.1, 9.2) aufweist, der eingerichtet ist, um ein durch die mindestens eine Ladekabel-Öffnung (6.1, 6.2) geführtes Ladekabel (5.1, 5.2) der Ladestation (1) zumindest bereichsweise zu stützen, wobei
- der mindestens eine Ladekabel-Arm (9.1, 9.2) relativ zu dem Öffnungs-Verkleidungselement (7) um eine Drehachse (11.1, 11.2) drehbar ist, wobei
- die Drehachse (11.1, 11.2) zumindest lokal senkrecht auf dem Öffnungs-Verkleidungselement (7) steht, und wobei
- der mindestens eine Ladekabel-Arm (9.1, 9.2) elastisch ausgebildet ist.

## Beschreibung

Die Erfindung betrifft ein Gehäuse für eine Ladestation und eine Ladestation mit einem solchen Gehäuse.

Ladestationen, insbesondere Schnellladestationen für Kraftfahrzeuge, welche einen elektrischen Antrieb aufweisen, gewinnen zunehmend an Bedeutung. Die Benutzung einer solchen Ladestation soll für den Benutzer möglichst einfach und komfortabel sein. Bei bekannten Ladestationen ist die Länge eines Ladekabels derart gewählt, dass das Ladekabel bei einer Nichtbenutzung - wenn ein Ladestecker des Ladekabels an der Ladestation angeordnet ist - nicht den Boden berührt, wo die Ladestation aufgestellt ist. Damit wird eine Verschmutzung und/oder Beschädigung des Ladekabels durch den Boden verhindert. Weiterhin wird verhindert, dass ein Kraftfahrzeug über das Ladekabel fährt und/oder darauf parkt. Nachteilig daran ist, dass aufgrund der daraus resultierenden beschränkten Länge des Ladekabels ein Aktionsradius der Ladestation, insbesondere ein Abstand zwischen einer Ladebuchse des zu ladenden Kraftfahrzeugs und der Ladestation beschränkt ist. Damit ist es bei den bekannten Ladestationen notwendig, das Kraftfahrzeug relativ zu der Ladestation exakt zu parken, da sonst der Ladestecker nicht in der Ladebuchse angeordnet werden kann.

Der Erfindung liegt daher die Aufgabe zugrunde, ein Gehäuse für eine Ladestation und eine Ladestation mit einem solchen Gehäuse zu schaffen, wobei die genannten Nachteile zumindest teilweise behoben, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Gehäuse für eine Ladestation mit einem mindestens eine Ladekabel-Öffnung begrenzenden Öffnungs-Verkleidungselement geschaffen wird. Das Gehäuse weist mindestens einen Ladekabel-Arm auf, der eingerichtet ist, um ein durch die mindestens eine Ladekabel-Öffnung geführtes Ladekabel der Ladestation zumindest bereichsweise zu stützen. Insbesondere ist der mindestens eine Ladekabel-Arm eingerichtet, um das durch die mindestens eine Ladekabel-Öffnung geführte Ladekabel der Ladestation zumindest bereichsweise aufzunehmen und/oder zumindest bereichsweise zu führen. Weiterhin ist der mindestens eine Ladekabel-Arm relativ zu dem Öffnungs-Verkleidungselement um eine Drehachse drehbar, wobei die Drehachse zumindest lokal senkrecht auf dem Öffnungs-Verkleidungselement steht. Darüber hinaus ist der mindestens eine Ladekabel-Arm elastisch ausgebildet. Vorteilhafterweise wird mittels des mindestens einen Ladekabel-Arms ein Aktionsradius des mindestens einen Ladekabels vergrößert. Insbesondere wird das mindestens eine Ladekabel mittels des mindestens einen Ladekabel-Arms in einer erhöhten Position zu einem zu ladenden Kraftfahrzeug geführt, sodass das mindestens eine Ladekabel, insbesondere ein Ladestecker des mindestens einen Ladekabels, in einfacher Weise an dem zu ladenden Kraftfahrzeug - insbesondere in einer Ladebuchse des Kraftfahrzeugs - angeordnet werden kann. Darüber hinaus erhöht sich aufgrund des vergrößerten Aktionsradius die Anzahl an möglicher Parkpositionen zum Laden des zu ladenden Kraftfahrzeugs an der Ladestation. Weiterhin erlaubt es die elastische Ausbildung des mindestens einen Ladekabel-Arms, dass der mindestens eine Ladekabel-Arm zumindest teilweise reversibel verbogen werden kann. Vorteilhafterweise werden damit bei einer Kollision eines Kraftfahrzeugs mit dem mindestens einen Ladekabel-Arm weder das Kraftfahrzeug noch der mindestens eine Ladekabel-Arm beschädigt.

In einer Ausgestaltung ist die mindestens eine Ladekabel-Öffnung als Polygon und/oder Bogenpolygon, insbesondere kreisförmig, ausgebildet. Insbesondere weist die kreisförmig ausgebildete Ladekabel-Öffnung einen lichten Durchmesser auf, der mindestens so groß, insbesondere genau so groß, wie ein Durchmesser des durch die mindestens eine Ladekabel-Öffnung geführten Ladekabels ist.

Insbesondere weist das Gehäuse ein Decken-Verkleidungselement und mindestens ein Seitenverkleidungselement auf, wobei ein Seitenverkleidungselement des mindestens einen Seitenverkleidungselements als das Öffnungs-Verkleidungselement ausgebildet ist. In einer Ausgestaltung weist das Gehäuse mindestens vier Seitenverkleidungselemente, insbesondere genau vier Seitenverkleidungselemente, auf.

In einer Ausgestaltung ist das Öffnungs-Verkleidungselement planar ausgebildet. Zusätzlich ist das Gehäuse insbesondere derart ausgebildet, dass bei einer bestimmungsgemäßen Benutzung des Gehäuses als Gehäuse einer Ladestation das Öffnungs-Verkleidungselement senkrecht zu einem Boden steht, wo die Ladestation aufgestellt ist, insbesondere senkrecht zu einer Kraftfahrzeug-Stellfläche an der Ladestation. In diesem Fall ist die Drehachse parallel zu dem Boden ausgerichtet.

In einer Ausgestaltung ist der mindestens eine Ladekabel-Arm derart an dem Öffnungs-Verkleidungselement angeordnet, dass bei der bestimmungsgemäßen Benutzung des Gehäuses ein dem Öffnungs-Verkleidungselement zugewandtes Ende des mindestens einen Ladekabel-Arms und die Kraftfahrzeug-Stellfläche einen - vertikalen oder lotrecht gemessenen - Abstand von 100 cm bis 250 cm, insbesondere von 150 cm bis 250 cm, insbesondere von 200 cm bis 230 cm, insbesondere von 210 cm bis 220 cm, aufweisen. Insbesondere wird der Abstand zwischen dem dem Öffnungs-Verkleidungselement zugewandten Ende des mindestens einen Ladekabel-Arms und der Kraftfahrzeug-Stellfläche derart gewählt, dass ein Benutzer der Ladestation aufrecht unter dem Ladekabel-Arm hindurch gehen kann - insbesondere ohne den Ladekabelarm zu berühren.

In einer Ausgestaltung umhüllt das Gehäuse bei der bestimmungsgemäßen Benutzung ein Inneres einer Ladestation zumindest teilweise, insbesondere vollständig, wobei insbesondere eine Aufstellfläche der Ladestation nicht von dem Gehäuse umhüllt wird.

Insbesondere weist ein Material, aus dem der mindestens eine Ladekabel-Arm gefertigt ist, ein Elastizitätsmodul von 1000 N/mm² bis 1800 N/mm² auf.

Gemäß einer Weiterbildung der Erfindung ist vorgesehen, dass der mindestens eine Ladekabel-Arm derart verlagerbar mit einem Gehäusekörper des Gehäuses verbunden ist, dass er wahlweise in einer Betriebsstellung und in einer Transportstellung angeordnet werden kann. Insbesondere ist der mindestens eine Ladekabel-Arm um die Drehasche drehbar mit dem Gehäusekörper verbunden, der mindestens eine Ladekabel-Arm kann also um die Drehachse gedreht werden, um ihn wahlweise in der Betriebsstellung und in der Transportstellung anzuordnen. Der Gehäusekörper wird insbesondere durch das Decken-Verkleidungselement und das mindestens eine Seitenverkleidungselement gebildet.

Insbesondere ist der mindestens eine Ladekabel-Arm derart verlagerbar mit dem Öffnungs-Verkleidungselement verbunden, dass er wahlweise in der Betriebsstellung und in der Transportstellung angeordnet werden kann.

Insbesondere erstreckt sich der mindestens eine Ladekabel-Arm in der Betriebsstellung von dem Gehäuse, insbesondere von dem Öffnungs-Verkleidungselement, weg. Insbesondere ist der mindestens eine Ladekabel-Arm derart ausgebildet, dass bei der bestimmungsgemäßen Benutzung des Gehäuses ein dem Öffnungs-Verkleidungselement abgewandtes Ende des mindestens einen Ladekabel-Arms und die Kraftfahrzeug-Stellfläche in der Betriebsstellung den Abstand von 100 cm bis 250 cm, insbesondere von 150 cm bis 250 cm, insbesondere von 200 cm bis 230 cm, insbesondere von 210 cm bis 220 cm, aufweisen. Alternativ oder zusätzlich ist der mindestens eine Ladekabel-Arm in der Betriebsstellung bei der bestimmungsgemäßen Benutzung des Gehäuses nahezu parallel, insbesondere parallel, zu der Kraftfahrzeug-Stellfläche. Alternativ oder zusätzlich schließt der mindestens eine Ladekabel-Arm in der Betriebsstellung mit dem Öffnungs-Verkleidungselement einen Winkel von 10° bis 50°, insbesondere von 30°, ein.

Im Kontext der vorliegenden technischen Lehre wird zur Bestimmung der Winkel ein gedachter Ladekabel-Arm-Verlauf betrachtet, wobei der gedachte Ladekabel-Arm-Verlauf durch eine Gerade durch das dem Öffnungs-Verkleidungselement abgewandte Ende des mindestens einen Ladekabel-Arms und das dem Öffnungs-Verkleidungselement zugewandte Ende des mindestens einen Ladekabel-Arms bestimmt ist.

Insbesondere liegt der mindestens eine Ladekabel-Arm in der Transportstellung zumindest teilweise an dem Gehäuse, insbesondere an dem Öffnungs-Verkleidungselement, an. Vorteilhafterweise ist damit ein kompakter Transport des Gehäuses möglich. Es ist auch möglich, eine inhärente Elastizität des mindestens einen Ladekabel-Arms auszunutzen und diesen beispielsweise mit einem Band oder dergleichen an das Gehäuse anzulegen, um eine möglichst kompakte Form in der Transportstellung zu realisieren.

In einer Ausgestaltung weist die Ladestation eine Arretiervorrichtung auf, mittels der der mindestens eine Ladekabel-Arm in der Betriebsstellung arretiert werden kann. Alternativ oder zusätzlich kann der mindestens eine Ladekabel-Arm mittels der Arretiervorrichtung in der Transportstellung arretiert werden.

Gemäß einer Weiterbildung der Erfindung ist vorgesehen, dass der mindestens eine Ladekabel-Arm zumindest bereichsweise eingerichtet ist, um das Ladekabel vollumfänglich - das heißt entlang einer geschlossenen Umfangslinie um den Umfang des Ladekabels - zu umgreifen.

Vorteilhafterweise wird damit das mindestens eine Ladekabel durch den Ladekabel-Arm geschützt.

In einer Ausgestaltung ist der mindestens eine Ladekabel-Arm zumindest teilweise schlauchförmig ausgebildet. Alternativ ist der Ladekabel-Arm zumindest teilweise rohrförmig ausgebildet.

Gemäß einer Weiterbildung der Erfindung ist vorgesehen, dass der mindestens eine Ladekabel-Arm gerade ausgebildet ist. Alternativ ist der mindestens eine Ladekabel-Arm gekrümmt ausgebildet.

Gemäß einer Weiterbildung der Erfindung ist vorgesehen, dass der mindestens eine Ladekabel-Arm mittels eines Ladekabel-Arm-Trägers mit dem Gehäusekörper drehbar - insbesondere um die Drehachse drehbar - verbunden ist.

Gemäß einer Weiterbildung der Erfindung ist vorgesehen, dass der mindestens eine Ladekabel-Arm-Träger eine Ladekabel-Aussparung aufweist und derart an dem mindestens einen Öffnungs-Verkleidungselement angeordnet ist, dass die mindestens eine Ladekabel-Öffnung von dem mindestens einen Ladekabel-Arm-Träger zumindest bereichsweise überdeckt wird. Dabei fluchtet die Ladekabel-Aussparung mit der mindestens einen Ladekabel-Öffnung. Vorteilhafterweise kann damit das mindestens eine Ladekabel direkt und geschützt aus einem Inneren der Ladestation durch die mindestens eine Ladekabel-Öffnung hindurch in den mindestens einen Ladekabel-Arm geleitet werden.

Gemäß einer Weiterbildung der Erfindung ist vorgesehen, dass der mindestens eine Ladekabel-Arm an einem dem Öffnungs-Verkleidungselement abgewandten Ende ein Ladekabel-Fixierungselement aufweist.

Insbesondere ist das Ladekabel-Fixierungselement eingerichtet, um eine Bewegung eines von dem mindestens einen Ladekabel-Arm gestützten Ladekabels relativ zu dem mindestens einen Ladekabel-Arm in zumindest eine Richtung zu verhindern. Vorteilhafterweise kann mittels des Fixierungselements ein Verdrehen und/oder eine Reibung des mindestens einen Ladekabels in dem mindestens einen Ladekabel-Arm zumindest reduziert werden, insbesondere verhindert werden.

Gemäß einer Weiterbildung der Erfindung ist vorgesehen, dass der mindestens eine Ladekabel-Arm eine Länge von 80 cm bis 150 cm, insbesondere von 100 cm bis 130 cm, insbesondere von 110 cm, aufweist.

Gemäß einer Weiterbildung der Erfindung ist vorgesehen, dass der mindestens eine Ladekabel-Arm als eine Stahlfeder, insbesondere eine Schraubenfeder, die in ihrem Inneren das Ladekabel aufnehmen kann, ausgebildet ist. Alternativ weist der mindestens eine Ladekabel-Arm einen Kunststoff auf. Alternativ besteht der mindestens eine Ladekabel-Arm aus einem Kunststoff.

Insbesondere weist der mindestens eine Ladekabel-Arm Polypropylen und/oder Polyethylen auf. Alternativ besteht der mindestens eine Ladekabel-Arm aus Polypropylen. Alternativ besteht der mindestens eine Ladekabel-Arm aus Polyethylen.

In einer Ausgestaltung des als Stahlfeder ausgebildeten mindestens einen Ladekabel-Arms ist die Stahlfeder zumindest teilweise mit mindestens einem Elastomer, insbesondere Polypropylen und/oder Polyethylen, verkleidet. Insbesondere umhüllt das mindestens eine Elastomer, insbesondere Polypropylen und/oder Polyethylen, die Stahlfeder. Alternativ oder zusätzlich ist die Stahlfeder um mindestens ein rohr- oder schlauchförmiges Elastomerteil herum ausgebildet, wobei das Ladekabel im Inneren des Elastomerteils - und damit zugleich im Inneren der insbesondere als Schraubenfeder ausgebildeteten Stahlfeder - angeordnet werden kann. Insbesondere weist das Elastomerteil Polypropylen und/oder Polyethylen auf oder besteht aus Polypropylen und/oder Polyethylen.

Die Aufgabe wird auch gelöst, indem eine Ladestation mit einem erfindungsgemäßen Gehäuse oder einem Gehäuse nach einer der zuvor beschriebenen Ausführungsformen geschaffen wird. Die Ladestation weist weiterhin mindestens ein Ladekabel auf, wobei das mindestens eine Ladekabel durch die mindestens eine Ladekabel-Öffnung aus der Ladestation herausgeführt ist. Weiterhin ist das mindestens eine Ladekabel zumindest teilweise durch den mindestens einen Ladekabel-Arm gestützt. In Zusammenhang mit der Ladestation ergeben sich insbesondere die Vorteile die bereits in Zusammenhang mit dem Gehäuse erläutert wurden.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

In einer Ausgestaltung weist das mindestens eine Ladekabel eine Schutzummantelung auf, die das mindestens eine Ladekabel zumindest teilweise umhüllt. Insbesondere weist das mindestens eine Ladekabel im Bereich des mindestens einen Ladekabel-Arms die Schutzummantelung nicht auf. Insbesondere ist die Schutzummantelung nur in einem Bereich des mindestens einen Ladekabels ausgebildet, der nicht von dem mindestens einen Ladekabel-Arm gestützt wird. Insbesondere ist die Schutzummantelung zwischen einem Ladestecker des mindestens einen Ladekabels und dem dem Öffnungs-Verkleidungselement abgewandten Ende des mindestens einen Ladekabel-Arms, insbesondere dem Ladekabel-Fixierungselement, ausgebildet.

In einer weiteren Ausgestaltung weist die Ladestation, insbesondere das Gehäuse, eine Ladestecker-Aufhängung auf, in welcher der Ladestecker des mindestens einen Ladekabels bei einer Nichtbenutzung des mindestens einen Ladekabels angeordnet werden kann. Insbesondere ist eine Länge des mindestens einen Ladekabels derart gewählt, dass das mindestens eine Ladekabel bei einer Nichtbenutzung - und somit einer Anordnung in der Ladestecker-Aufhängung - nicht den Boden berührt.

In einer weiteren Ausgestaltung weist die Ladestation zwei Ladepunkte und damit zwei Ladekabel und zwei Ladekabel-Arme auf, wobei ein erstes Ladekabel zumindest teilweise von einem ersten Ladekabel-Arm gestützt wird und ein zweites Ladekabel zumindest teilweise von einem zweiten Ladekabel-Arm gestützt wird. Insbesondere weist die Ladestation das Öffnungs-Verkleidungselement mit zwei Ladekabel-Öffnungen auf. Alternativ oder zusätzlich schließen die zwei Ladekabel-Arme in der Betriebsstellung einen Winkel von 80° bis 160°, insbesondere 120°, ein. Alternativ oder zusätzlich sind die zwei Ladekabel-Arme in der Transportstellung nahezu parallel, insbesondere parallel, zueinander und/oder schließen einen Winkel von höchstens 10° ein. Alternativ oder zusätzlich sind die zwei Ladekabel-Arme derart ausgebildet, dass ein erstes dem Öffnungs-Verkleidungselement abgewandtes Ende des ersten Ladekabel-Arms und ein zweites dem Öffnungs-Verkleidungselement abgewandtes Ende des zweiten Ladekabel-Arms einen Abstand von 200 cm bis 300 cm, insbesondere 260 cm, aufweisen. Alternativ oder zusätzlich sind die zwei Ladekabel-Arme derart ausgebildet, dass ein erstes dem Öffnungs-Verkleidungselement zugewandtes Ende des ersten Ladekabel-Arms und ein zweites dem Öffnungs-Verkleidungselement zugewandtes Ende des zweiten Ladekabel-Arms einen Abstand von 50 cm bis 100 cm, insbesondere 74 cm, aufweisen. Vorteilhafterweise ist es damit in einfacher und komfortabler Weise möglich, zwei Kraftfahrzeuge gleichzeitig und ohne eine vorgeschriebene Ausrichtung der Kraftfahrzeuge relativ zueinander und/oder relativ zu der Ladestation aufzuladen.

Die Erfindung wird im Folgenden anhand der Zeichnung näher erläutert. Dabei zeigen:
- Fig. 1: eine schematische Darstellung eines Ausführungsbeispiels einer Ladestation in einer ersten Ansicht,
- Fig. 2: eine schematische Darstellung des Ausführungsbeispiels der Ladestation in einer zweiten Ansicht, und
- Fig. 3: eine schematische Darstellung des Ausführungsbeispiels der Ladestation in einer dritten Ansicht.

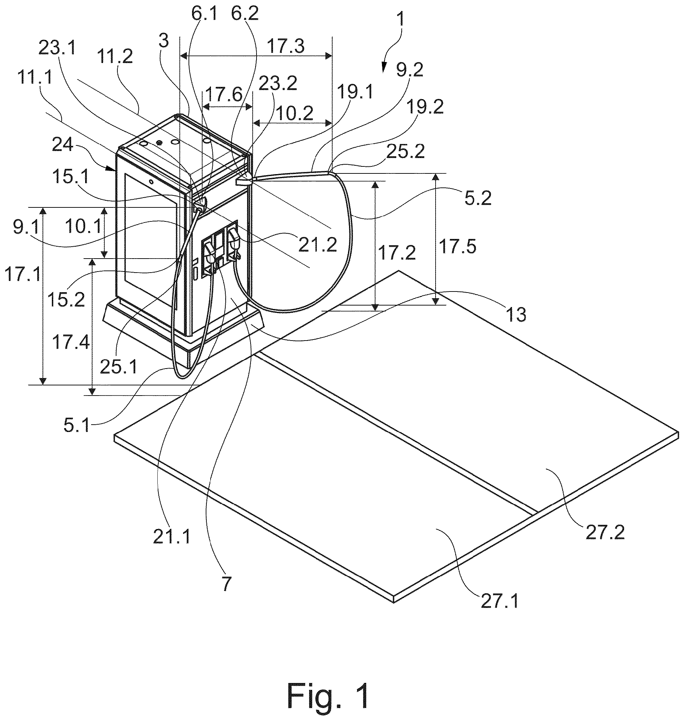

**Figur 1** zeigt eine schematische Darstellung eines Ausführungsbeispiels einer Ladestation 1 mit einem Ausführungsbeispiels eines Gehäuses 3 und einem ersten Ladekabel 5.1 in einer ersten Ansicht.

Das erste Ladekabel 5.1 ist durch eine erste Ladekabel-Öffnung 6.1 aus der Ladestation 1 herausgeführt.

Das Gehäuse 3 weist ein die erste Ladekabel-Öffnung 6.1 begrenzendes Öffnungs-Verkleidungselement 7 auf. Weiterhin weist das Gehäuse 3 einen ersten Ladekabel-Arm 9.1 auf, der eingerichtet ist, um das durch die erste Ladekabel-Öffnung 6.1 geführte erste Ladekabel 5.1 der Ladestation 1 zumindest bereichsweise zu stützen und optional aufzunehmen und/oder zu führen. Der erste Ladekabel-Arm 9.1 ist elastisch ausgebildet und relativ zu dem Öffnungs-Verkleidungselement 7 um eine erste Drehachse 11.1 drehbar, wobei die erste Drehachse 11.1 zumindest lokal senkrecht auf dem Öffnungs-Verkleidungselement 7 steht. Vorzugsweise ist der erste Ladekabel-Arm 9.1 zumindest bereichsweise eingerichtet, um das erste Ladekabel 5.1 vollumfänglich zu umgreifen.

In der dargestellten Ausgestaltung weist die Ladestation 1 zusätzlich ein zweites Ladekabel 5.2 auf, wobei das zweite Ladekabel 5.2 durch eine zweite Ladekabel-Öffnung 6.2 aus der Ladestation 1 herausgeführt ist. Weiterhin begrenzt das Öffnungs-Verkleidungselement 7 die erste Ladekabel-Öffnung 6.1 und die zweite Ladekabel-Öffnung 6.2. Zusätzlich weist das Gehäuse 3 einen zweiten Ladekabel-Arm 9.2 auf, der eingerichtet ist, um das durch die zweite Ladekabel-Öffnung 6.2 geführte zweite Ladekabel 5.2 der Ladestation 1 zumindest bereichsweise zu stützen und optional aufzunehmen und/oder zu führen. Darüber hinaus ist der zweite Ladekabel-Arm 9.2 elastisch ausgebildet und relativ zu dem Öffnungs-Verkleidungselement 7 um eine zweite Drehachse 11.2 drehbar, wobei die zweite Drehachse 11.2 zumindest lokal senkrecht auf dem Öffnungs-Verkleidungselement 7 steht. Vorzugsweise ist der zweite Ladekabel-Arm 9.2 zumindest bereichsweise eingerichtet, um das zweite Ladekabel 5.2 vollumfänglich zu umgreifen.

Besonders bevorzugt weist ein Material, aus dem der erste Ladekabel-Arm 9.1 und/oder der zweite Ladekabel-Arm 9.2 gefertigt ist, ein Elastizitätsmodul von 1000 N/mm² bis 1800 N/mm² auf.

In einer Ausgestaltung beträgt eine erste Länge 10.1 des ersten Ladekabel-Arms 9.1 von 80 cm bis 150 cm, insbesondere von 100 cm bis 130 cm, insbesondere 110 cm. Alternativ oder zusätzlich beträgt eine zweite Länge 10.2 des zweiten Ladekabel-Arms 9.2 von 80 cm bis 150 cm, insbesondere von 100 cm bis 130 cm, insbesondere 110 cm.

Das Öffnungs-Verkleidungselement 7 ist vorzugsweise planar ausgebildet. Alternativ oder zusätzlich ist das Gehäuse 3 derart ausgebildet, dass das Öffnungs-Verkleidungselement 7 senkrecht zu einem Boden 13 steht, wo die Ladestation 1 aufgestellt ist. In diesem Fall sind die Drehachsen 11.1, 11.2 parallel zu dem Boden 13 ausgerichtet.

Der erste Ladekabel-Arm 9.1 und/oder der zweite Ladekabel-Arm 9.2 befinden sich in der dargestellten Ansicht in einer Betriebsstellung. Dabei erstreckt sich der erste Ladekabel-Arm 9.1 und/oder der zweite Ladekabel-Arm 9.2 von dem Gehäuse 3, insbesondere von dem Öffnungs-Verkleidungselement 7, weg.

In einer Ausgestaltung ist der erste Ladekabel-Arm 9.1 derart an dem Öffnungs-Verkleidungselement 7 angeordnet, dass ein dem Öffnungs-Verkleidungselement 7 zugewandtes Ende 15.1 des ersten Ladekabel-Arms 9.1 und eine erste Kraftfahrzeug-Stellfläche 27.1 einen ersten Abstand 17.1 aufweisen, der von 100 cm bis 250 cm, insbesondere von 150 cm bis 250 cm, insbesondere von 200 cm bis 230 cm, besonderes bevorzugt von 210 cm bis 220 cm, beträgt. Alternativ oder zusätzlich ist der zweite Ladekabel-Arm 9.2 derart an dem Öffnungs-Verkleidungselement 7 angeordnet, dass ein dem Öffnungs-Verkleidungselement 7 zugewandtes Ende 19.1 des zweiten Ladekabel-Arms 9.2 und eine zweite Kraftfahrzeug-Stellfläche 27.2 einen zweiten Abstand 17.2 aufweisen, der von 100 cm bis 250 cm, insbesondere von 150 cm bis 250 cm, insbesondere von 200 cm bis 230 cm, besonderes bevorzugt von 210 cm bis 220 cm, beträgt. Insbesondere ist der erste Abstand 17.1 gleich dem zweiten Abstand 17.2. Alternativ oder zusätzlich sind der erste Ladekabel-Arm 9.1 und der zweite Ladekabel-Arm 9.2 derart ausgebildet, dass in der Betriebsstellung ein dem Öffnungs-Verkleidungselement 7 abgewandtes Ende 15.2 des ersten Ladekabel-Arms 9.1 und ein dem Öffnungs-Verkleidungselement abgewandtes Ende 19.2 des zweiten Ladekabel-Arms 9.2 einen dritten Abstand 17.3 aufweisen, der von 200 cm bis 300 cm, besonderes bevorzugt 260 cm. beträgt. Alternativ oder zusätzlich ist der erste Ladekabel-Arm 9.1 derart ausgebildet, dass in der Betriebsstellung das dem Öffnungs-Verkleidungselement 7 abgewandte Ende 15.2 des ersten Ladekabel-Arms 9.1 und die erste Kraftfahrzeug-Stellfläche 27.1 einen vierten Abstand 17.4 aufweisen, der von 100 cm bis 250 cm, insbesondere von 150 cm bis 250 cm, insbesondere von 200 cm bis 230 cm, besonderes bevorzugt von 210 cm bis 220 cm, beträgt. Alternativ oder zusätzlich ist der zweite Ladekabel-Arm 9.2 derart ausgebildet, dass in der Betriebsstellung das dem Öffnungs-Verkleidungselement 7 abgewandte Ende 19.2 des zweiten Ladekabel-Arms 9.2 und die zweite Kraftfahrzeug-Stellfläche 27.2 einen fünften Abstand 17.5 aufweisen, der von 100 cm bis 250 cm, insbesondere von 150 cm bis 250 cm, insbesondere von 200 cm bis 230 cm, besonderes bevorzugt von 210 cm bis 220 cm, beträgt. Alternativ oder zusätzlich sind der erste Ladekabel-Arm 9.1 und der zweite Ladekabel-Arm 9.2 derart ausgebildet, dass in der Betriebsstellung das dem Öffnungs-Verkleidungselement 7 zugewandte Ende 15.1 des ersten Ladekabel-Arms 9.1 und das dem Öffnungs-Verkleidungselement zugewandte Ende 19.1 des zweiten Ladekabel-Arms 9.2 einen sechsten Abstand 17.6 aufweisen, der von 50 cm bis 100 cm, besonderes bevorzugt 74 cm. beträgt.

Das Gehäuse 3 weist außerdem eine erste Ladestecker-Aufhängung 21.1 und eine zweite Ladestecker-Aufhängung 21.2 auf. Bei einer Nichtbenutzung der Ladekabel 5 kann das erste Ladekabel 5.1 in der ersten Ladestecker-Aufhängung 21.1 und/oder das zweite Ladekabel 5.2 in der zweiten Ladestecker-Aufhängung 21.2 angeordnet werden. Insbesondere ist eine Länge des ersten Ladekabels 5.1 und/oder des zweiten Ladekabels 5.2 derart gewählt, dass das erste Ladekabel 5.1 und/oder das zweite Ladekabel 5.2 bei der Nichtbenutzung - und somit einer Anordnung in der ersten Ladestecker-Aufhängung 21.1 und/oder der zweiten Ladestecker-Aufhängung 21.2 - nicht den Boden 13 berührt.

Weiterhin ist der erste Ladekabel-Arm 9.1 über einen ersten, relativ zu dem Öffnungs-Verkleidungselement 7 drehbaren Ladekabel-Arm-Träger 23.1 mit dem Gehäusekörper 24 drehbar verbunden. Alternativ oder zusätzlich ist der zweite Ladekabel-Arm 9.2 über einen zweiten, relativ zu dem Öffnungs-Verkleidungselement 7 drehbaren Ladekabel-Arm-Trägers 23.2 mit dem Gehäusekörper 24 drehbar verbunden.

In einer Ausgestaltung weist der erste Ladekabel-Arm 9.1 an dem dem Öffnungs-Verkleidungselement 7 abgewandten Ende 15.2 ein erstes Ladekabel-Fixierungselement 25.1 auf. Alternativ oder zusätzlich weist der zweite Ladekabel-Arm 9.2 an dem dem Öffnungs-Verkleidungselement 7 abgewandten Ende 19.2 ein zweites Ladekabel-Fixierungselement 25.2 auf.

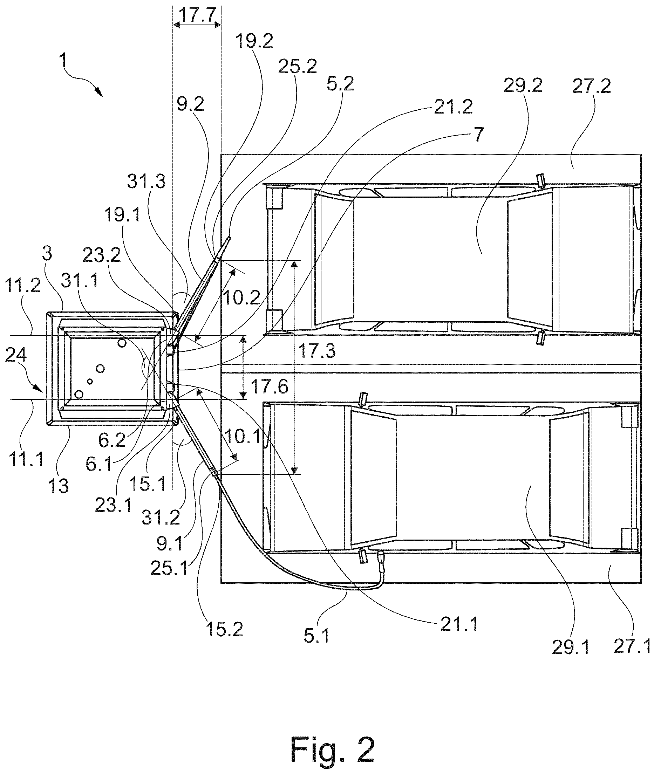

Insbesondere wird ein Kraftfahrzeug 29 - dargestellt in Figur 2 - zum Laden an der Ladestation 1 auf einer der Kraftfahrzeug-Stellflächen 27.1, 27.2 geparkt. Dabei wird ein auf der ersten Kraftfahrzeug-Stellfläche 27.1 angeordnetes Kraftfahrzeug 29.1 mittels des ersten Ladekabels 5.1 geladen und/oder ein auf der zweiten Kraftfahrzeug-Stellfläche 27.2 angeordnetes Kraftfahrzeug 29.2 wird mittels des zweiten Ladekabels 5.2 geladen.

**Figur 2** zeigt eine schematische Darstellung des Ausführungsbeispiels der Ladestation 1 in einer zweiten Ansicht.

Gleiche und funktionsgleiche Elemente sind mit denselben Bezugszeichen versehen, sodass insofern auf die vorangegangene Beschreibung verwiesen wird.

Figur 2 zeigt eine Draufsicht auf die Ladestation 1, wobei auf der ersten Kraftfahrzeug-Stellfläche 27.1 ein erstes Kraftfahrzeug 29.1 und auf der zweiten Kraftfahrzeug-Stellfläche 27.2 ein zweites Kraftfahrzeug 29.2 angeordnet ist. Dabei ist das erste Kraftfahrzeug 29.1 über das erste Ladekabel 5.1 mit der Ladestation 1 verbunden.

Insbesondere weisen die Ladestation 1 und die erste Kraftfahrzeug-Stellfläche 27.1 und/oder die zweite Kraftfahrzeug-Stellfläche 27.2 einen siebten Abstand auf, der von 50 cm bis 100 cm, besonders bevorzugt 64 cm, beträgt.

In einer Ausgestaltung schließen der erste Ladekabel-Arm 9.1 und der zweite Ladekabel-Arm 9.2 in der Betriebsstellung einen ersten Winkel 31.1 von 80° bis 160°, besonders bevorzugt von 120°, ein. Alternativ oder zusätzlich schließen der erste Ladekabel-Arm 9.1 und das Öffnungs-Verkleidungselement 7 einen zweiten Winkel 31.2 von 10° bis 50°, besonders bevorzugt von 30°, ein. Alternativ oder zusätzlich schließen der zweite Ladekabel-Arm 9.2 und das Öffnungs-Verkleidungselement 7 einen dritten Winkel 31.3 von 10° bis 50°, besonders bevorzugt von 30°, ein.

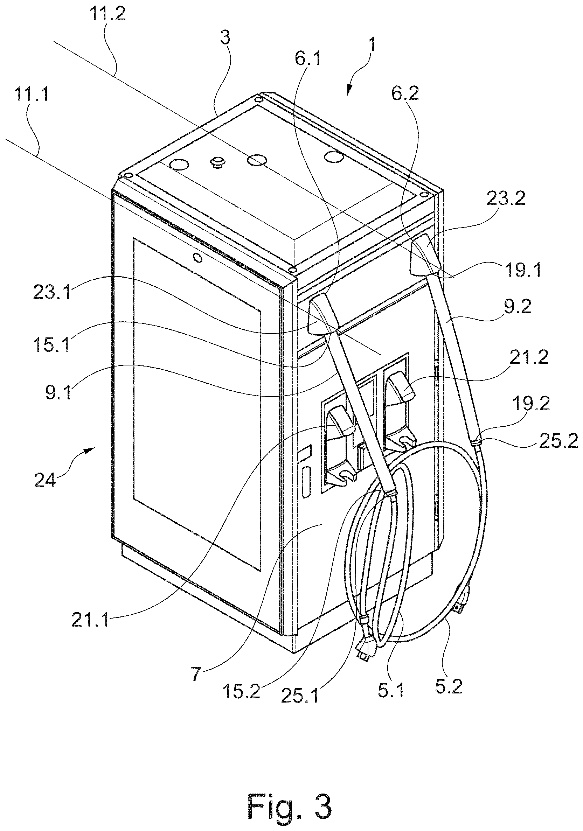

**Figur 3** zeigt eine schematische Darstellung des Ausführungsbeispiels der Ladestation 1 in einer dritten Ansicht.

In Figur 3 ist die Ladestation in einer Transportstellung dargestellt. Dabei ist der erste Ladekabel-Arm 9.1 und/oder der zweite Ladekabel-Arm 9.2 gegenüber der Betriebsstellung aus den Figuren 1 und 2 um die erste Drehachse 11.1 und/oder die zweite Drehachse 11.2 gedreht. Insbesondere verlaufen der erste Ladekabel-Arm 9.1 und/oder der zweite Ladekabel-Arm 9.2 entlang dem Gehäuse 3, insbesondere dem Öffnungs-Verkleidungselement 7. Weiterhin ist das erste Ladekabel 5.1 und/oder das zweite Ladekabel 5.2 eingerollt, sodass ein kompakter Transport der Ladestation 1 und/oder des Gehäuses 3 möglich ist. Zusätzlich ist es möglich, dass die Ladekabel-Arme 9.1, 9.2 durch ein Band oder dergleichen unter Ausnutzung ihrer inhärenten Elastizität in Richtung des Gehäuses 3 gezogen oder an dieses angelegt werden, um eine noch kompaktere Form zu verwirklichen.

Vorzugsweise sind der erste Ladekabel-Arm 9.1 und der zweite Ladekabel-Arm 9.2 in der Transportstellung nahezu parallel, insbesondere parallel, zueinander ausgerichtet.

## Patentansprüche

1. Gehäuse (3) für eine Ladestation (1) mit einem mindestens eine Ladekabel-Öffnung (6.1, 6.2) begrenzenden Öffnungs-Verkleidungselement (7), wobei
- das Gehäuse (3) mindestens einen Ladekabel-Arm (9.1, 9.2) aufweist, der eingerichtet ist, um ein durch die mindestens eine Ladekabel-Öffnung (6.1, 6.2) geführtes Ladekabel (5.1, 5.2) der Ladestation (1) zumindest bereichsweise zu stützen, wobei
- der mindestens eine Ladekabel-Arm (9.1, 9.2) relativ zu dem Öffnungs-Verkleidungselement (7) um eine Drehachse (11.1, 11.2) drehbar ist, wobei
- die Drehachse (11.1, 11.2) zumindest lokal senkrecht auf dem Öffnungs-Verkleidungselement (7) steht, und wobei
- der mindestens eine Ladekabel-Arm (9.1, 9.2) elastisch ausgebildet ist.

2. Gehäuse (3) nach Anspruch 1, wobei der mindestens eine Ladekabel-Arm (9.1, 9.2) derart verlagerbar mit einem Gehäusekörper (24) des Gehäuses (3), insbesondere mit dem Öffnungs-Verkleidungselement (7), verbunden ist, dass er wahlweise in einer Betriebsstellung und in einer Transportstellung angeordnet werden kann, wobei die Ladestation (1) vorzugsweise eine Arretiervorrichtung aufweist, mittels der der Ladekabel-Arm (9.1, 9.2) in der Betriebsstellung und/oder in der Transportstellung arretiert werden kann.

3. Gehäuse (3) nach einem der vorhergehenden Ansprüche, wobei der mindestens eine Ladekabel-Arm (9.1, 9.2) zumindest bereichsweise eingerichtet ist, um das Ladekabel (5.1, 5.2) vollumfänglich zu umgreifen.

4. Gehäuse (3) nach einem der vorhergehenden Ansprüche, wobei der mindestens eine Ladekabel-Arm (9.1, 9.2) gerade oder gekrümmt ausgebildet ist.

5. Gehäuse (3) nach einem der vorhergehenden Ansprüche, wobei der mindestens eine Ladekabel-Arm (9.1, 9.2) mittels eines Ladekabel-Arm-Trägers (23.1, 23.2) mit dem Gehäusekörper (24) drehbar verbunden ist.

6. Gehäuse (3) nach einem der vorhergehenden Ansprüche, wobei der mindestens eine Ladekabel-Arm-Träger (23.1, 23.2) eine Ladekabel-Aussparung aufweist und derart an dem mindestens einen Öffnungs-Verkleidungselement (7) angeordnet ist, dass die mindestens eine Ladekabel-Öffnung (6.1, 6.2) von dem mindestens einen Ladekabel-Arm-Träger (23.1, 23.2) zumindest bereichsweise überdeckt wird, wobei die Ladekabel-Aussparung mit der mindestens einen Ladekabel-Öffnung (6.1, 6.2) fluchtet.

7. Gehäuse (3) nach einem der vorhergehenden Ansprüche, wobei der mindestens eine Ladekabel-Arm (9.1, 9.2) an einem dem Öffnungs-Verkleidungselement (7) abgewandten Ende (15.2, 19.2) ein Ladekabel-Fixierungselement (25.1, 25.2) aufweist, das vorzugsweise eingerichtet ist, um eine Bewegung eines von dem mindestens einen Ladekabel-Arm (9.1, 9.2) gestützten Ladekabels (5.1, 5.2) relativ zu dem mindestens einen Ladekabel-Arm (9.1, 9.2) in zumindest eine Richtung zu verhindern.

8. Gehäuse (3) nach einem der vorhergehenden Ansprüche, wobei der mindestens eine Ladekabel-Arm (9.1, 9.2) eine Länge (10.1, 10.2) von 80 cm bis 150 cm, insbesondere von 100 cm bis 130 cm, aufweist.

9. Gehäuse (3) nach einem der vorhergehenden Ansprüche, wobei der mindestens eine Ladekabel-Arm (9.1, 9.2)
a) als eine - insbesondere zumindest teilweise mit mindestens einem Elastomer verkleidete - Stahlfeder ausgebildet ist, oder
b) einen Kunststoff, insbesondere Polypropylen und/oder Polyethylen, aufweist, oder
c) aus einem Kunststoff, insbesondere Polypropylen oder Polyethylen, besteht.

10. Ladestation (1) mit einem Gehäuse (3) nach einem der vorhergehenden Ansprüche und mindestens einem Ladekabel (5.1, 5.2), wobei das mindestens eine Ladekabel (5.1, 5.2) durch die mindestens eine Ladekabel-Öffnung (6.1, 6.2) aus der Ladestation (1) herausgeführt ist, und wobei das mindestens eine Ladekabel (5.1, 5.2) zumindest teilweise durch den mindestens einen Ladekabel-Arm (9.1, 9.2) gestützt ist.
